# EUROPEAN PATENT SPECIFICATION

(11) **EP 4 071 130 B1**
(45) Date of publication and mention of the grant of the patent: **23.08.2023**
(21) Application number: 20896067.4
(22) Date of filing: 03.12.2020
(51) Int. Cl.: C04B 38/00, D04H 1/4209, C04B 35/44, C04B 35/622, C04B 35/626, C04B 35/636, C04B 35/80, C04B 38/08

(54) **INORGANIC FIBER MOLDED BODY, HEATING FURNACE, STRUCTURE, AND METHOD FOR MANUFACTURING INORGANIC FIBER MOLDED BODY**
FORMKÖRPER AUS ANORGANISCHEN FASERN, HEIZKESSEL, STRUKTUR UND VERFAHREN ZUR HERSTELLUNG EINES FORMKÖRPERS AUS ANORGANISCHEN FASERN
CORPS MOULÉ À BASE DE FIBRE INORGANIQUE, FOUR DE CHAUFFAGE, STRUCTURE ET PROCÉDÉ DE FABRICATION DE CORPS MOULÉ À BASE DE FIBRE INORGANIQUE

(30) Priority: 03.12.2019 JP 2019218952
(43) Date of publication of application: 12.10.2022
(73) Proprietor: Denka Company Limited, Tokyo 103-8338 (JP)
(72) Inventor: KOYAMA, Atsunori, Tokyo 103-8338 (JP); MATSUYOSHI, Mizuharu, Tokyo 103-8338 (JP); HIRATA, Satoshi, Tokyo 103-8338 (JP); TANAKA, Takaaki, Tokyo 103-8338 (JP); KOUNO, Kouji, Kisarazu-City, Chiba 2920056 (JP)
(74) Representative: Gulde & Partner
(86) International application number: PCT/JP2020/045008
(87) International publication number: WO 2021/112169

(56) References cited:
- JP-A- 2002 284 567
- JP-A- 2005 022 878
- JP-A- 2018 080 094
- JP-A- 2019 078 337

## Description

### TECHNICAL FIELD

The present invention relates to an inorganic fiber molded body, a heating furnace, a structure, and a method for manufacturing an inorganic fiber molded body.

### BACKGROUND ART

So far, various developments have been made on inorganic fiber molded bodies . As this kind of technique, for example, the techniques described in Patent Documents 1 and 2 are known. Patent Document 1 describes an inorganic fiber molded body obtained by vacuum molding a slurry containing an alumina fiber and an alumina powder as a high temperature refractory heat insulating material (Claim 1, Table 1, and the like).

Further, Patent Document 2 describes a heat insulating material including 80% by mass of a heat insulating aggregate having a porous structure, 15% by mass of a fire resistant fiber, and 5% by mass of a binder (Claim 1, Examples 1 to 3 in Table 1, and the like).

### RELATED DOCUMENT

### PATENT DOCUMENT

[Patent Document 1] Japanese Unexamined Patent Publication No. H10-194863
[Patent Document 2] Japanese Unexamined Patent Publication No. 2018-080094

### SUMMARY OF THE INVENTION

### TECHNICAL PROBLEM

However, as a result of the study by the present inventors, it has been found that there is room for improvement in the heat insulating properties, the heat resistance, and the moldability of the inorganic fiber molded body and the heat insulating material described in Patent Documents 1 and 2.

### SOLUTION TO PROBLEM

As a result of further studies conducted by the present inventors, it has been found that the thermal conductivity at a high temperature can be kept low by using an alumina fiber and an inorganic porous filler in combination, the thermal shrinkage of the inorganic fiber molded body at a high temperature can be reduced by appropriately controlling the lower limit of the ratio of crystalline minerals in the alumina fiber, and the molding stability at the time of vacuum molding can be improved by appropriately controlling the upper limit of the content of the inorganic porous filler. As a result of further diligent research based on such findings, it has been found that when the alumina fiber and the inorganic porous filler are used in combination, the lower limit of the ratio of crystalline minerals in the alumina fiber is set to a predetermined value or more, and the content of the inorganic porous filler is increased, the heat insulating properties, the heat resistance, and the moldability are improved by setting the upper limit to a predetermined value or less, and have completed the present invention.

According to the present invention,
there is provided an inorganic fiber molded body including an alumina fiber, an inorganic porous filler, and a colloidal silica,
in which a ratio of crystalline minerals in the alumina fiber is 30% by mass or more and 80% by mass or less,
the inorganic porous filler contains CaO·6Al₂O₃ in which a particle diameter D95, which has a cumulative value of 95% in a volume frequency particle size distribution, is 300 um or less, and
in 100% by mass of the inorganic fiber molded body,
a content of the alumina fiber is 15% by mass or more and 70% by mass or less,
a content of the inorganic porous filler is 20% by mass or more and 79% by mass or less, and
a content of the colloidal silica is 2% by mass or more and 8% by mass or less.

Further, according to the present invention,
there is provided a heating furnace or a structure including the inorganic fiber molded body in at least a part thereof.

Further, according to the present invention,
there is provided a method for manufacturing the inorganic fiber molded body including
a step of preparing a water slurry containing an alumina fiber, an inorganic porous filler, and colloidal silica, and
a step of removing water by vacuum suctioning the water slurry to obtain a molded body.

### ADVANTAGEOUS EFFECTS OF INVENTION

According to the present invention, an inorganic fiber molded body having excellent heat insulating properties, heat resistance, and moldability is provided.

### DESCRIPTION OF EMBODIMENTS

The inorganic fiber molded body of the present embodiment will be outlined.

The inorganic fiber molded body includes an alumina fiber, an inorganic porous filler, and a colloidal silica.

A ratio of crystalline minerals in the alumina fiber is 30% by mass or more and 80% by mass or less, and the inorganic porous filler contains CaO·6Al₂O₃ in which a particle diameter D95, which has a cumulative value of 95% in a volume frequency particle size distribution, is 300 um or less. In 100% by mass of the inorganic fiber molded body, a content of the alumina fiber is 15% by mass or more and 70% by mass or less, a content of the inorganic porous filler is 20% by mass or more and 79% by mass or less, and a content of the colloidal silica is 2% by mass or more and 8% by mass or less.

According to the findings of the present inventors, it has been found that when the alumina fiber and the inorganic porous filler are used in combination, the thermal conductivity at a high temperature can be kept low and the heat insulating properties are enhanced, compared with a case where the inorganic porous filler is not used.

Although the detailed mechanism is not clear, the blending of the alumina fiber (Fibers composed of alumina) makes it possible to introduce relatively large pores into the molded body and the flexibility of the fibers makes it possible to reduce the weight and the heat capacity of the molded body and impart heat resistance. It is considered that the heat transfer caused by convection of air in the pores generated at a high temperature can be reduced by dividing large pores by the inorganic porous filler due to the present in the voids between the fibers, and the radiant heat transfer can also be suppressed by scattering radiant light while further reducing the convection heat transfer due to the fine pores and the particle structure inherent in the inorganic porous filler.

Further, it has been found that an increase in the thermal conductivity at a high temperature can be suppressed by setting the upper limit of the content of the inorganic fibers such as the alumina fiber to the above upper limit value or less. On the other hand, when the bulk density of the inorganic fiber molded body is reduced by setting the lower limit of the content of the inorganic fibers to the above lower limit value or more, it is possible to reduce the weight and the heat capacity and improve the heat resistance.

By setting the upper limit of the ratio of crystalline minerals in the alumina fiber to the above upper limit value or less, the strength of the fiber can be increased and pulverization during the manufacturing of the molded body can be suppressed. On the other hand, it has been found that by setting the lower limit of the ratio of crystalline minerals in the alumina fiber to the above lower limit value or more, the heat shrinkage of the inorganic fiber molded body at a high temperature can be reduced and the heat resistance can be improved.

It has been found that the moldability of vacuum molding and the like can be improved by setting the upper limit of the content of the inorganic porous filler to the above upper limit value or less. In addition, the weight and the heat capacity can be reduced and the heat resistance can be improved by reducing the bulk density. On the other hand, by setting the lower limit of the content of the inorganic porous filler to the above lower limit value or more, it is possible to reduce the thermal conductivity at a high temperature and improve the heat insulating property while having a predetermined strength.

By setting the upper limit of the particle diameter D95 of CaO·6Al₂O₃ in the inorganic porous filler to the above upper limit value or less, adhesion between the inorganic porous filler and the inorganic fiber, or adhesion between the inorganic porous fillers through an organic binder and an inorganic binder can be improved. On the other hand, by setting the particle diameter D95 of CA6 to the above lower limit value or more, it is possible to suppress a decrease in productivity due to densification caused by the aggregation of the raw materials during manufacturing and clogging during filtration.

At least a part or the entirety of a heating furnace or structure of the present embodiment may be formed of the inorganic fiber molded body.

According to the present embodiment, since it is possible to suppress an increase in thermal conductivity at a high temperature of 1000°C,1400°C, or the like by using the inorganic fiber molded body, the heating furnace or the structure exhibiting excellent heat insulating properties can be realized.

The inorganic fiber molded body can be applied without particular limitation as long as the molded body is a member that requires heat resistance, but for example, the molded body can be suitably used for forming at least a part of a member used in a high temperature environment such as a heating furnace or a kiln facility that requires heat resistance of 1400°C or higher. Further, the inorganic fiber molded body may be used as a high temperature refractory heat insulating material in a wide range of fields such as steel, metal, ceramics, and automobiles.

Hereinafter, the inorganic fiber molded body of the present embodiment will be described in detail.

The inorganic fiber molded body includes inorganic fibers. The inorganic fibers include at least an alumina fiber.

In addition, the inorganic fibers may include oxide fibers such as alkaline earth silicate wool (AES), refractory ceramic fibers (RCF), and titania and silica. These may be used alone or in combination of two or more. Among these, an alumina fiber including Al₂O₃ and SiO₂ can be used from the viewpoint of thermal conductivity and heat resistance.

The lower limit of the true specific gravity of the alumina fiber is, for example, 2.8 or more, preferably 2.9 or more, and more preferably 3.0 or more. Therefore, the mechanical strength of the inorganic fiber molded body can be improved. The upper limit of the true specific gravity of the alumina fiber is not particularly limited, and is, for example, 3.8 or less, preferably 3.7 or less, and more preferably 3.6 or less. Therefore, the heat shrinkage and the weight can be reduced.

The upper limit of the content of the alumina fiber is, for example, 70% by mass or less, preferably 65% by mass or less, and more preferably 50% by mass or less in 100% by mass of the inorganic fiber molded body. Therefore, the increase in thermal conductivity at a high temperature can be suppressed. On the other hand, the lower limit of the content of the alumina fiber is, for example, 15% by mass or more in 100% by mass of the inorganic fiber molded body. Therefore, it is possible to reduce the weight and the heat capacity and improve the heat resistance by reducing the bulk density of the inorganic fiber molded body.

The upper limit of the ratio of the crystalline minerals is, for example, 80% by mass or less, and preferably 75% by mass or less in 100% by mass of alumina fiber. Accordingly, the decrease in the strength of the fiber due to excessive crystallization is suppressed and the destruction and pulverization of the fiber is reduced. Thus, the effect of improving the strength and the moldability of the inorganic fiber molded body can be obtained. On the other hand, the lower limit of the ratio of the crystalline minerals is, for example, 30% by mass or more, and preferably 33% by mass or more in 100% by mass of the alumina fiber. Therefore, the heat shrinkage of the inorganic fiber molded body at a high temperature can be reduced and the heat resistance can be improved.

As a method for manufacturing the alumina fiber, a known method can be adopted, and a method including the following dope preparation step, spinning step, cotton collecting step, and firing step may be used. Therefore, it is possible to prepare bulky alumina fibers (cotton-like fibers).

### (Dope Preparation Step)

As an alumina source, for example, an aqueous solution of aluminum oxychloride, an alumina sol or the like is used, and as a silica source, for example, a silica sol, polysiloxane, and the like is used. As required, polyvinyl alcohol, polyethylene glycol, and the like can be used as a spinning aid. A spinning dope is obtained by mixing these materials in a desired ratio and concentrating the mixture under reduced pressure.

### (Spinning Step)

The spinning dope prepared in the dope preparation step is extruded from fine holes into the air using a spinning device to obtain an alumina fiber precursor. The spinning device used is not particularly limited, and a blowing spinning device, a rotating disk spinning device, or the like can be used. From the viewpoint of preventing the fibers extruded from the fine holes from fusion-bonding to one another and thereby manufacturing an alumina fiber having a high areal pressure, the rotating disk spinning method described in Japanese Unexamined Patent Publication No. 2010-31416 is preferably used.

By adjusting the size of the fine holes and the extrusion conditions, the average fiber diameter and the fiber diameter distribution of the obtained alumina fiber and the content of a non-fibrous product referred to as a shot can be controlled. Typically, the average fiber diameter of the alumina fiber is adjusted to a range of 3 um or more and 8 um or less. The content of shots having a length of 50 um or more is preferably less than 1%.

### (Cotton Collecting Step)

Suction is performed on the alumina fiber precursor obtained in the spinning step from the lower part of a net conveyor installed in a cotton collecting chamber to accumulate the alumina fiber precursor, and an aggregate of the alumina fiber precursor is obtained. By adjusting the speed of the net conveyor, the thickness and surface weight of the obtained aggregate are adjusted.

### (Firing Step)

The alumina fiber precursor obtained in the cotton collecting step is fired in the firing step. In the firing step, a degreasing step and a crystallization step are performed in this order using a firing device. The amount of crystalline minerals in the alumina fiber is adjusted by the treatment temperature in the firing step. When the amount of Al₂O₃ in the fiber is high, corundum is contained, but it is necessary to adjust the firing temperature to a high temperature in order to improve the crystallinity. On the other hand, in the composition having a low amount of Al₂O₃ and containing mullite, the crystallinity can be enhanced even by firing at a low temperature.

The inorganic fiber molded body contains an inorganic porous filler. The inorganic porous filler contains particles containing CaO·6Al₂O₃ in the composition as a calcium aluminate porous particles, that is, porous CA6 particles.

The porous CA6 particles may contain CaO·6Al₂O₃ (referred to as CA6) as a main component in the mineral phase. The porous CA6 particles may contain other mineral phases such as 3CaO·Al₂O₃ (referred to as C3A), CaO·Al₂O₃ (referred to as CA), CaO·2Al₂O₃ (referred to as CA2) . These may be used alone or in combination of two or more. Among these, a porous particle containing CA6 as a main component may be used from the viewpoint of thermal conductivity. The content of CA6 in the mineral phase may be, for example, 30% by mass or more, 50% by mass or more, and preferably 80% by weight or more.

The upper limit of the particle diameter D95 of the porous CA6 particles is, for example, 300 um or less, preferably 280 um or less, and more preferably 270 um or less. Therefore, adhesion between the inorganic porous filler and the inorganic fibers, or adhesion between the inorganic porous fillers through an organic binder and an inorganic binder can be improved. Therefore, since peeling from the fibers and the filler is less likely to occur, it is possible to suppress the separation of the raw materials during the slurry manufacturing. Further, in a case where the organic binder is fired down when used at a high temperature and the binding force is lost, it is possible to prevent the inorganic porous filler from being easily detached.

On the other hand, the lower limit of the particle diameter D95 of the porous CA6 particles is, for example, 15 um or more, preferably 20 um or more, and more preferably 30 µm or more. Therefore, clogging during sheet forming is less likely to occur, and a fiber molded body having a homogeneous structure can be obtained. In addition, the sheet forming time can be shortened to obtain the effect of improving the manufacturing amount.

The upper limit of the bulk density of the porous CA6 particles is, for example, 0.9 g/cm³ or less, and preferably 0.89 g/cm³ or less. Therefore, the heat insulating properties of the fiber molded body can be improved. On the other hand, the lower limit of the bulk density of the porous CA6 particles is, for example, 0.6 g/cm³ or more, and preferably 0.61 g/cm³ or more. Therefore, the strength of the fiber molded body can be increased.

The porous CA6 particles can be manufactured by, for example, blending components to have such a component ratio that the molar ratio of CaO and Al₂O₃ of calcium aluminate finally synthesized by mixing or mixing and pulverizing aggregate raw materials such as a calcia raw material and an alumina raw material is approximately 1: 6, kneading the mixture with water, performing molding, then firing the molded product at a temperature of 1300°C to 1700°C, and pulverizing the resultant with a pulverizer.

The upper limit of the content of the inorganic porous filler is, for example, 79% by mass or less, and preferably 75% by mass or less in 100% by mass of the inorganic fiber molded body. Therefore, the moldability can be improved by suppressing aggregation of the raw material slurry and clogging at the time of suction molding. In addition, the weight and the heat capacity can be reduced and the heat resistance can be improved by reducing the bulk density. By setting the content to 75% by mass or less, the inorganic fiber molded body can be made porous and can be reduced in weight, and an increase in thermal conductivity in a low temperature range lower than 1000°C can be suppressed. In addition, the heat resistance is improved and the destruction of the structure and the generation of cracks due to the thermal stress generated in the heat cycle can be suppressed.

On the other hand, the lower limit of the content of the inorganic porous filler is, for example, 20% by mass or more, and preferably 30% by mass or more in 100% by mass of the inorganic fiber molded body. Therefore, it is possible to reduce the thermal conductivity at a high temperature and improve the heat insulating properties while having a predetermined strength.

The inorganic fiber molded body contains a colloidal silica as a binder.

The inorganic fiber and the inorganic porous filler can be prevented from being peeled and detached by using the inorganic binder remaining in the inorganic fiber molded body after firing, and the heat shrinkage of the inorganic fiber molded body can be reduced.

As the binder, inorganic binders other than the colloidal silica or organic binders may be used.

Examples of other inorganic binders include alumina sol and hydraulic alumina.

Examples of organic binders include polyvinyl alcohol, polyethylene oxide, polyethylene glycol, starch, (meth)acrylic acid ester copolymer, polyoxyethylene alkyl ether, epoxy-based, phenol-based, acrylic acid ester-based, polyurethane-based, isocyanate-based, polyimide-based, and vinyl acetate-based adhesives, and various rubber-based adhesives.

These may be used alone or in combination of two or more.

The content of colloidal silica is, for example, 2% by mass to 8% by mass, and preferably 3% by mass to 7% by mass in terms of solid content in 100% by mass of the inorganic fiber molded body. Within such a range, the viscosity of the slurry is stabilized and the homogeneity is improved. Thus, the structure of the fiber molded body formed into a sheet becomes homogeneous and the filter paper is less likely to be clogged during the sheet forming to improve the productivity. In addition, it is possible to keep a balance between the thermal conductivity and the heat shrinkage at a high temperature.

In the present specification, "to" means that an upper limit value and a lower limit value are included unless otherwise specified.

The characteristics of the inorganic fiber molded body will be described.

The upper limit of the thermal conductivity of the inorganic fiber molded body at 1400°C is, for example, 0.45 W/m·K or less, preferably 0.43 W/m·K or less, and more preferably 0.40 W/m·K or less. Accordingly, an inorganic fiber molded body having excellent heat insulating properties at a high temperature can be realized. On the other hand, the lower limit of the thermal conductivity may be, for example, 0.27 W m·K or more, 0.30 W/m·K or more, and 0.31 W/m·K or more. Therefore, it is possible to keep a balance with other characteristics such as heat shrinkage and bulk density.

As a method for manufacturing the inorganic fiber molded body, for example, a vacuum molding method, an extrusion molding method, or the like can be used. These may be used alone or in combination of two or more. Among these, a vacuum molding method may be used from the viewpoint of strength and durability.

In a case of using a vacuum molding method, the method for manufacturing the inorganic fiber molded body may include a step of preparing a water slurry containing an alumina fiber, an inorganic porous filler, and a colloidal silica, and a step of removing water by vacuum suctioning the water slurry to obtain a molded body.

Specific examples of the vacuum molding method may include the following slurry step, sheet forming step, and molding step.

In the slurry step, fiber raw materials (raw material components) such as an inorganic fiber, an inorganic porous filler, an inorganic binder, and an organic binder are dissolved or dispersed in water to prepare a water slurry. As required, the water slurry may contain additives generally used in the sheet forming method such as a flocculating agent.

Subsequently, in the sheet forming step, a molding die provided with a net having a predetermined mesh that allows water to pass through but does not allow the fiber raw material to pass through is used. Further, the molding die may be provided with a filter paper for preventing the passage of an inorganic porous filler or a binder. By performing vacuum suction, the water slurry is allowed to pass through the net to dehydrate the water in the water slurry, and the fiber raw materials are caused to remain on the surface of the net to obtain a sheet forming body. Drying may be performed after or during dehydration. Further, the surface shape of the net may be appropriately selected and may be flat or partially provided with a three-dimensional structure.

Examples of sheet forming include a method including pouring a water slurry into a box-shaped container provided with a net plate on the bottom, dehydrating the water slurry while performing vacuum suction under the net, and drying the cake on the net surface, and a method including immersing a flat net provided with a suction mechanism in a water slurry, and drying a cake filtered up by performing vacuum suction. The cake may be dried by hot air drying.

As used herein, the term "sheet forming body" is commonly used as a technical term to indicate the state of an object obtained by using a technique for paper making a fibrous material.

Thereafter, in the molding step, the obtained molded body is heat-treated to manufacture a sheet-formed molded body having a predetermined shape. The sheet-formed molded body may be processed into a board shape, for example.

The thickness of the inorganic fiber molded body formed of the sheet-formed molded body is not particularly limited, and may be 1 mm to 100 mm, and preferably 10 mm to 60 mm. Therefore, an inorganic fiber molded body having excellent handleability can be realized.

By the vacuum molding method as described above, an inorganic fiber molded body which is formed of a suction molded body can be obtained.

### [Examples]

Hereinafter, the present invention will be described in detail with reference to Examples, but the present invention is not limited to the description of these Examples.

The raw material components shown in Table 1 are as follows.

### (Alumina Fiber)

· Alumina fiber 1: ALCEN B80, manufactured by Denka Company Limited (composition: Al₂O₃, and SiO₂, crystalline mineral ratio: 66% by mass, true specific gravity: 3.2, average fiber diameter: 3.3 um)
· Alumina fiber 2: ALCEN B95N1, manufactured by Denka Company Limited, was heat-treated in an air atmosphere at a maximum temperature of 1200°C for 3 hours (composition: Al₂O₃, and SiO₂, crystalline mineral ratio: 33% by mass, true specific gravity: 3.5, average fiber diameter: 3.2 um) and used.
· Alumina fiber 3: ALCEN B73CL, manufactured by Denka Company Limited, was heat-treated in an air atmosphere at a maximum temperature of 1400°C for 2 hours using an electric furnace (composition: Al₂O₃, and SiO₂, crystalline mineral ratio: 78% by mass, true specific gravity: 3.0, average fiber diameter: 5.5 um) and used.
· Alumina fiber 4: ALCEN B80L, manufactured by Denka Company Limited, was heat-treated in an air atmosphere at a maximum temperature of 1100°C for 2 hours using an electric furnace (composition: Al₂O₃, and SiO₂ crystalline mineral ratio: 21% by mass, true specific gravity: 3.1, average fiber diameter: 4.0 um) and used.

### (Inorganic Porous Filler)

· CA6 particle 1: HB09 of a particle size of 0 mm to 1 mm, manufactured by Denka Company Limited, was sieved with a sieve having a mesh opening of 0.3 mm, allowed to pass through the sieve (porous particles containing CA6 as a main component, D95: 210 um, bulk density: 0.76 g/cm³) and used.
· CA6 particle 2: Calcium carbonate and aluminum hydroxide were blended so that the molar ratio of CaO and Al₂O₃ was 1: 6. 45% by mass of water was added to the raw material blended so that the mass ratio of the mixture and starch was 60:40, and the mixture was kneaded, then molded, and heat-treated at a maximum of 1500°C for 1 hour in an air atmosphere using an electric furnace to obtain CA6 having a porosity of 78%. Further, the resultant was pulverized, sieved with a 0.3 mm sieve, allowed to pass through the sieve (porous particles containing CA6 as a main component, D95: 235 um, bulk density: 0.61 g/cm³), and used.

- CA6 particle 3: Calcium carbonate and aluminum hydroxide were blended so that the molar ratio of CaO and Al₂O₃ was 1: 6. 25% by mass of water was added to the raw material blended so that the mass ratio of the mixture and starch was 95: 5, kneaded, then molded, and heat-treated at a maximum of 1500°C for 1 hour in an air atmosphere using an electric furnace to obtain CA6 having a porosity of 48%. Further, the resultant was pulverized, sieved with a 0.3 mm sieve, allowed to pass through the sieve (porous particles containing CA6 as a main component, D95: 270 um, bulk density: 0.89 g/cm³), and used.

### (Inorganic Non-Porous Filler)

· Alumina powder: (manufactured by Sumitomo Chemical Co., Ltd., trade name: AM210, D95: 22 um, bulk density: 1.12 g/cm³)

### (Inorganic Binder)

· Colloidal silica (manufactured by Nissan Chemical Industries, Ltd., trade name: SNOWTEX 30, solid content concentration: 30 mass)

### (Organic Binder)

· Starch (manufactured by Japan Corn Starch, Co., Ltd., trade name: SK-20)

### (Al₂O₃ Content Ratio and Crystalline Mineral Ratio)

The mineral composition and the mineral ratio of the inorganic fiber were identified and quantified by the Rietveld analysis method by powder X-ray diffraction using magnesium oxide as a standard substance.

### (D95)

The particle diameter D95 having a cumulative value of 95% in the volume frequency particle size distribution of the inorganic porous filler was measured using a laser diffraction scattering type particle diameter distribution measuring device.

### (Bulk Density)

After filling a stainless steel container with an internal volume of 160 cm³ with the inorganic filler until the inorganic filler overflowed from the mouth of the container, tapping was performed 10 times (dropping from a height of 30 mm), the aggregate overflowing from the mouth of the container was scraped off, and a value obtained by dividing the increase in the weight of the container by the internal volume was used as the bulk density.

### <Preparation of Inorganic Fiber Molded Body>

### (Example 1)

The raw material components of the inorganic fiber, the inorganic porous filler, the inorganic binder, and the organic binder were added to 2000 parts by mass of water with respect to 100 parts by mass of the total of the raw material components at the blending ratio shown in Table 1, and wet-mixed for 20 minutes. A water slurry (mixture) having a slurry concentration (total content of solid contents of inorganic fiber, inorganic porous filler, organic binder and inorganic binder) of 5% by mass was prepared.

### (Vacuum Molding Treatment)

A cylindrical molding die provided with a wire mesh having a mesh opening of 80 mesh and a diameter of 210 mm was immersed in the obtained water slurry while performing suction from below the bottom mesh with a vacuum pump. The raw material was deposited on the wire mesh by performing suction of the water slurry, and when the thickness of the deposition layer exceeded 30 mm, the molding die was taken out from the water slurry to manufacture a columnar sheet forming body.

After stopping suction and releasing the molding die, the plate-shaped sheet forming body was dried with a hot air dryer at 100°C for 16 hours, and then the upper and the lower parts of the plate-shaped sheet forming body were cut and polished to a thickness of 25 mm to manufacture a plate-shaped sheet-formed molded body (inorganic fiber molded body).

### (Examples 2 to 11 and Comparative Examples 1 to 6)

A plate-shaped sheet-formed molded body (inorganic fiber molded body) was manufactured in the same manner as in Example 1 except that the raw material components shown in Table 1 and the blending ratios were used.

However, in Comparative Example 1, the inorganic porous filler was not used. In Comparative Examples 2 and 3, an inorganic non-porous filler was used instead of the inorganic porous filler.

In Table 1, the inorganic porous filler and the inorganic non-porous filler are collectively referred to as an inorganic filler.

**[Table 1]**

| Inorganic fiber molded body sample | | | Unit | Comparative Example 1 | Comparative Example 2 | Comparative Example 3 | Example 1 | Example 2 | Example 4 | Comparative Example 4 | Example 5 | Example 6 | Comparative Example 5 | Example 7 | Example 8 | Comparative Example 6 | Example 10 | Example 11 |
|---|---|---|---|---|---|---|---|---|---|---|---|---|---|---|---|---|---|---|
| | Alumina fiber | Alumina fiber 1 | % by mass | 90 | 70 | 45 | 70 | 45 | 15 | 10 | | | | 46 | 43 | 42 | 45 | 45 |
| | | Alumina fiber 2 | | | | | | | | | 45 | | | | | | | |
| | | Alumina fiber 3 | | | | | | | | | | 45 | | | | | | |
| | | Alumina fiber 4 | | | | | | | | | | | 30 | | | | | |
| | Inorganic porous filler | CA6 particle 1 | % by mass | | | | 20 | 45 | 75 | 80 | 45 | 45 | 60 | 47 | 44 | 43 | | |
| | | CA6 particle 2 | | | | | | | | | | | | | | | 45 | |
| Raw material components | | CA6 particle 3 | | | | | | | | | | | | | | | | 45 |
| | Inorganic non-porous filler | Alumina powder | % by mass | | 20 | 45 | | | | | | | | | | | | |
| | Inorganic binder | Colloidal silica | % by mass (in terms of solid content) | 5 | 5 | 5 | 5 | 5 | 5 | 5 | 5 | 5 | 5 | 2 | 8 | 10 | 5 | 5 |
| | Organic binder | Starch | % by mass | 5 | 5 | 5 | 5 | 5 | 5 | 5 | 5 | 5 | 5 | 5 | 5 | 5 | 5 | 5 |
| | Crystalline mineral ratio in alumina fiber | | % by mass | 66 | 66 | 66 | 66 | 66 | 66 | 66 | 33 | 78 | 21 | 66 | 66 | 66 | 66 | 66 |
| | Bulk density of inorganic fiber | | g/cm³ | - | 1.12 | 1.12 | 0.76 | 0.76 | 0.76 | 0.76 | 0.76 | 0.76 | 0.76 | 0.76 | 0.76 | 0.76 | 0.61 | 0.89 |
| Vacuum molding state | | | | O | O | X | O | O | O | X | O | O | O | O | O | X | O | O |
| Bulk density of inorganic fiber molded bodv | | | g/cm³ | 0.18 | 0.24 | 0.42 | 0.20 | 0.30 | 0.45 | 0.50 | 0.33 | 0.28 | 0.30 | 0.29 | 0.31 | 0.45 | 0.25 | 0.36 |
| Maximum operating temperature (Line shrinkage after heating for 24 hours: ≤ 3%) | | | °C | 1500 | 1600 | - | 1450 | 1450 | 1450 | - | 1400 | 1450 | 1300 | 1400 | 1450 | - | 1400 | 1450 |
| Thermal conductiviy | | Room temperature | W/m·K | 0.06 | 0.10 | - | 0.06 | 0.07 | 0.11 | - | 0.11 | 0.09 | 0.10 | 0.07 | 0.09 | - | 0.06 | 0.10 |
| | | 1400°C | | 0.51 | 0.46 | - | 0.43 | 0.40 | 0.32 | - | 0.39 | 0.38 | 0.41 | 0.37 | 0.35 | - | 0.33 | 0.39 |
| Total evaluation | | | | - | - | X Molding failure | O | O | O | X Molding failure | O | O | X Insufficient heat resistance | O | O | X Molding failure | O | O |

The obtained inorganic fiber molded bodies of Examples and Comparative Examples were evaluated based on the following evaluation items. The evaluation results are shown in Table 1. In the total evaluation in Table 1, "-" indicating the standard is marked in Comparative Examples 1 and 2.

### (Evaluation of Vacuum Molding)

In the vacuum molding treatment, in a case where the wire mesh is clogged with the raw materials or the raw material deposition layer is excessively densified, the filtration resistance is increased, so that the treatment time for obtaining a molded body having a predetermined thickness is increased and the productivity is decreased. In addition, the segregation of the raw materials inside the molded body causes differences in the components and densities, which makes it difficult to obtain a homogeneous structure.

The vacuum molding state of the obtained inorganic fiber molded body was evaluated as follows.

When the molding die was immersed in the water slurry, and there was no noticeable change in the amount of water suctioned to the thickness of 30 mm from the beginning of the formation of the deposition layer, the suction moldability was determined to be good and the evaluation was marked with O. On the other hand, a case where the amount of water suctioned was clearly reduced and the treatment time for achieving a thickness of 30 mm was increased was marked with X.

### (Heat Shrinkage)

The obtained inorganic fiber molded body was heated by raising the temperature in an electric furnace, held for 24 hours, and then naturally cooled to room temperature (23°C), and the heat shrinkage (%) was measured. The heat shrinkage rate was calculated by measuring the dimensions in the length direction and the thickness direction using a linear scale and dividing the difference from the dimensions before heating by the dimensions before heating.

Then, the heating temperature was changed to obtain the maximum operating temperature (°C) at which the heat shrinkage (%) was 30 or less. The results are shown in Table 1.

### (Thermal Conductivity)

The thermal conductivity of the obtained inorganic fiber molded body was measured in a temperature range from room temperature (RT) to 1400°C in accordance with JIS R 2251-1. Table 1 shows the thermal conductivity (W/m·K) at room temperature and 1400°C.

It was shown that the inorganic fiber molded bodies of Examples 1 to 6 had low thermal conductivity at a high temperature of 1400°C and excellent heat insulating properties as compared with Comparative Examples 1 and 2. Further, the inorganic fiber molded bodies of Examples 1 to 6 had excellent vacuum moldability as compared with Comparative Examples 3, 4, and 6, and the maximum operating temperature was high and the heat resistance was excellent as compared with Comparative Example 5.

Such inorganic fiber molded bodies of Examples 1 to 6 can be suitably used for heat insulating members and heat resistant members, and among these, members used in a high temperature environment such as a heating furnace and a kiln furnace facility.

This application claims priority on the basis of Japanese Patent Application No. 2019-218952 filed on December 3, 2019.

## Claims

1. An inorganic fiber molded body comprising:
an alumina fiber;
an inorganic porous filler; and
a colloidal silica,
wherein a ratio of crystalline minerals in the alumina fiber is 30% by mass or more and 80% by mass or less,
the inorganic porous filler contains CaO·6Al₂O₃ in which a particle diameter D95, which has a cumulative value of 95% in a volume frequency particle size distribution, is 300 um or less, and
in 100% by mass of the inorganic fiber molded body,
a content of the alumina fiber is 15% by mass or more and 70% by mass or less,
a content of the inorganic porous filler is 20% by mass or more and 79% by mass or less, and
a content of the colloidal silica is 2% by mass or more and 8% by mass or less.

2. The inorganic fiber molded body according to claim 1,
wherein a bulk density of the inorganic porous filler is 0.6 g/cm³ or more and 0.9 g/cm³ or less.

3. The inorganic fiber molded body according to claim 1 or 2,
wherein a thermal conductivity at 1400°C is 0.27 W/m·K or more and 0.45 W/m-K or less.

4. The inorganic fiber molded body according to any one of claims 1 to 3,
wherein the inorganic fiber molded body is formed of a suction molded body.

5. The inorganic fiber molded body according to any one of claims 1 to 4,
wherein the inorganic fiber molded body is used for forming at least a part of a heating furnace.

6. A heating furnace or a structure comprising:
the inorganic fiber molded body according to any one of claims 1 to 5 in at least a part thereof.

7. A method for manufacturing the inorganic fiber molded body according to any one of claims 1 to 5, the method comprising:
a step of preparing a water slurry containing an alumina fiber, an inorganic porous filler, and colloidal silica; and
a step of removing water by vacuum suctioning the water slurry to obtain a molded body.

8. The method for manufacturing the inorganic fiber molded body according to claim 7,
wherein the water slurry contains an organic binder in the step of preparing the water slurry.

## Patentansprüche

1. Formkörper aus anorganischen Fasern, umfassend:
eine Aluminiumoxidfaser;
einen anorganischen porösen Füllstoff; und
ein kolloidales Siliciumdioxid,
wobei ein Anteil kristalliner Mineralien in der Aluminiumoxidfaser 30 Massenprozent oder mehr und 80 Massenprozent oder weniger beträgt,
der anorganische poröse Füllstoff CaO·6Al₂O₃ enthält, bei dem ein Teilchendurchmesser D95, der einen kumulativen Wert von 95 % in einer Volumenhäufigkeits-Teilchengrößenverteilung hat, 300 um oder weniger beträgt, und
wobei in 100 Massenprozent des Formkörpers aus anorganischen Fasern:
ein Gehalt an Aluminiumoxidfasern 15 Masseprozent oder mehr und 70 Masseprozent oder weniger beträgt,
ein Gehalt des anorganischen porösen Füllstoffs 20 Masseprozent oder mehr und 79 Masseprozent oder weniger beträgt und
ein Gehalt des kolloidalen Siliciumdioxids 2 Massenprozent oder mehr und 8 Massenprozent oder weniger beträgt.

2. Formkörper aus anorganischen Fasern nach Anspruch 1,
wobei die Schüttdichte des anorganischen porösen Füllstoffs 0,6 g/cm³ oder mehr und 0,9 g/cm³ oder weniger beträgt.

3. Formkörper aus anorganischen Fasern nach Anspruch 1 oder 2,
wobei die Wärmeleitfähigkeit bei 1400°C 0,27 W/m·K oder mehr und 0,45 W/m·K oder weniger beträgt.

4. Formkörper aus anorganischen Fasern nach einem der Ansprüche 1 bis 3,
wobei der Formkörper aus anorganischen Fasern aus einem Saugformkörper gebildet ist.

5. Formkörper aus anorganischen Fasern nach einem der Ansprüche 1 bis 4,
wobei der Formkörper aus anorganischen Fasern zur Bildung mindestens eines Teils eines Heizofens verwendet wird.

6. Heizofen oder Struktur, umfassend:
den Formkörper aus anorganischen Fasern nach einem der Ansprüche 1 bis 5 in zumindest einem Teil davon.

7. Verfahren zur Herstellung eines Formkörpers aus anorganischen Fasern nach einem der Ansprüche 1 bis 5, wobei das Verfahren umfasst:
einen Schritt der Herstellung einer Wasseraufschlämmung, die eine Aluminiumoxidfaser, einen anorganischen porösen Füllstoff und kolloidales Siliciumdioxid enthält; und
einen Schritt der Wasserentfernung durch Vakuumabsaugen der Wasseraufschlämmung, um einen Formkörper zu erhalten.

8. Verfahren zur Herstellung eines Formkörpers aus anorganischen Fasern nach Anspruch 7,
wobei die Wasseraufschlämmung ein organisches Bindemittel im Schritt der Herstellung der Wasseraufschlämmung enthält.

## Revendications

1. Corps moulé à base de fibres inorganiques, comprenant :
une fibre d'alumine ;
une charge poreuse inorganique ; et
une silice colloïdale,
dans lequel une proportion de minéraux cristallins dans la fibre d'alumine est supérieure ou égale à 30 % en masse et inférieure ou égale à 80 % en masse,
la charge poreuse inorganique contient du CaO·6Al₂O₃ dans lequel un diamètre de particule D95, qui a une valeur cumulative de 95 % dans une distribution de fréquence de volume de taille de particule, est de 300 um ou moins, et
dans 100 % en masse du corps moulé à base de fibres inorganiques,
la teneur en fibres d'alumine est supérieure ou égale à 15 % en masse et inférieure ou égale à 70 % en masse,
une teneur en charge poreuse inorganique est supérieure ou égale à 20 % en masse et inférieure ou égale à 79 % en masse, et
la teneur en silice colloïdale est supérieure ou égale à 2 % en masse et inférieure ou égale à 8 % en masse.

2. Corps moulé à base de fibres inorganiques selon la revendication 1,
dans lequel la densité apparente de la charge poreuse inorganique est de 0,6 g/cm³ ou plus et de 0,9 g/cm³ ou moins.

3. Corps moulé à base de fibres inorganiques selon la revendication 1 ou 2,
dans lequel la conductivité thermique à 1400°C est supérieure ou égale à 0,27 W/m·K et inférieure ou égale à 0,45 W/m·K.

4. Corps moulé à base de fibres inorganiques selon l'une des revendications 1 à 3,
dans lequel le corps moulé à base de fibres inorganiques est formé d'un corps moulé par aspiration.

5. Corps moulé à base de fibres inorganiques selon l'une des revendications 1 à 4,
dans lequel le corps moulé à base de fibres inorganiques est utilisé pour former au moins une partie d'un four de chauffage.

6. Four de chauffage ou structure, comprenant :
le corps moulé à base de fibres inorganiques selon l'une quelconque des revendications 1 à 5 dans au moins une partie de celui-ci.

7. Procédé de fabrication du corps moulé à base de fibres inorganiques selon l'une quelconque des revendications 1 à 5, le procédé comprenant :
une étape de préparation d'une suspension d'eau contenant une fibre d'alumine, une charge poreuse inorganique et de la silice colloïdale ; et
une étape d'élimination de l'eau par aspiration sous vide de la suspension d'eau pour obtenir un corps moulé.

8. Procédé de fabrication du corps moulé à base de fibres inorganiques selon la revendication 7,
dans lequel la suspension d'eau contient un liant organique lors de l'étape de préparation de la suspension d'eau.
